# EUROPÄISCHE PATENTSCHRIFT

(11) **EP 2 243 726 B1**
(45) Veröffentlichungstag und Bekanntmachung des Hinweises auf die Patenterteilung: **25.09.2013**
(21) Anmeldenummer: 10160445.2
(22) Anmeldetag: 20.04.2010
(51) Int. Cl.: B60P 7/06, B60P 7/08, B65D 88/56, B65D 90/00

(54) **Verwendung eines Transportcontainers und Verfahren zum Entladen solch eines Transportcontainers**
Use of a transport container and method for discharging such a transport container
Utilisation d'un conteneur de transport et procédé de décharge d'un tel conteneur de transport

(30) Priorität: 20.04.2009 DE 102009017810
(43) Veröffentlichungstag der Anmeldung: 27.10.2010
(73) Patentinhaber: Red Parcel Post AG, 47051 Duisburg (DE)
(72) Erfinder: Hellmich, Walter, 46539 Dinslaken (DE)
(74) Vertreter: Michalski Hüttermann & Partner Patentanwälte

(56) Entgegenhaltungen:
- DE-A1- 1 964 772
- DE-A1- 3 232 229
- GB-A- 1 390 518
- JP-A- 2001 261 105
- JP-A- 2002 104 580
- US-A- 5 326 212
- US-A1- 2008 056 839
- US-B1- 6 537 003

## Beschreibung

Die Erfindung betrifft eine Verwendung eines Transportcontainers sowie ein Verfahren zum Entladen eines derartigen Transportcontainers, wobei der Transportcontainer zum Transport von Post-Paketen mit Hilfe eines Lastkraftwagens, beispielsweise eines Sattelschleppers, verwendet werden kann.

Beispielsweise aus US 7,114,909 B2 ist es bekannt, Schüttgut, wie beispielsweise Kohle, in ein Transportvolumen eines Lastkraftwagens (LKW) zu füllen. Der LKW weist eine am oberen Dachbereich angelenkte Klappe auf, die automatisch aufschwingen kann, wenn der LKW seitlich gekippt wird. In der gekippten Stellung ergibt zwischen der aufgeschwungenen Klappe und dem übrigen LKW eine Ausgangsöffnung, durch welche das Schüttgut heraus fällt.

Nachteilig bei derartigen Entladeverfahren ist, dass diese Art der Entladung lediglich für Schüttgut angewendet werden kann, da andernfalls die im Transportvolumen befindlichen Transportgegenstände beim Entladen beschädigt werden würden.

Auch aus JP 2001 261105 A ist ein Transportcontainer bekannt, welcher durch Zwischenwände in verschiedene Kammern unterteilt werden kann, um in den Kammern unterschiedlichen Müll aufzunehmen. Die Transportcontainer wird an einer Stirnseite ausgekippt, wobei die Zwischenwände nacheinander erst geöffnet werden, wenn die benachbarte Kammer des Transportcontainers bereits ausgeschüttet worden ist.

Insbesondere zum Transport von Paketen ist es aus EP 0 652 132 A1 bekannt eine Transportbox austauschbar mit einem Kleinlaster zu verbinden und für das Entleeren der Transportbox diese schnell und einfach von dem Kleinlaster zu lösen. Während der Kleinlaster bereits die nächste Transportbox transportieren kann, kann die abgeladene Transportbox in Ruhe beispielsweise von Hand entladen werden.

Dokument DE 10 2007 024 670 weist auch eine Vorrichtung zur Entladung von Post-Paketen aus einem Behälter auf, wobei die Vorrichtung eine Auffangvorrichtung aufweist, die in den Laderaum des Behälters hinein verfahrbar ist.

Ferner ist aus der US 5,326,212 A ein Lastwagenanhänger bekannt, bei dem mehrere kleinere Transportboxen nebeneinander auf dem Gestell für eine große Transportbox angeordnet sein können. Die mehreren kleinen Transportpboxen können durch Öffnen ihrer Seitenwände zu einer großen Transportbox verbunden werden.

Es besteht ein ständiges Bedürfnis das Entladen von Paketen zu vereinfachen, um insbesondere die Standzeit zu reduzieren und Kosten einzusparen.

Es ist die Aufgabe der Erfindung Maßnahmen aufzuzeigen mit deren Hilfe das Entladen von Post-Paketen vereinfacht werden kann.

Die Lösung der Aufgabe erfolgt erfindungsgemäß durch die Verwendung eines Transportcontainers zum Transportieren und Ausschütten von Post-Paketen mit den Merkmalen des Anspruchs 1 sowie ein Verfahren zum Entladen eines Transportcontainers mit Post-Paketen mit den Merkmalen des Anspruchs 11. Bevorzugte Ausgestaltungen der Erfindung sind in den Unteransprüchen angegeben.

In der folgenden Beschreibung ist der Begriff. "Transportgegenstand" als Post-Paket zu verstehen.

Die erfindungsgemäße Verwendung eines Transportcontainers, der insbesondere als Wechselbrücke für einen Lastkraftwagen ausgestaltet ist, umfasst das Transportieren und Ausschütten von Post-Paketen. Dabei weist der Transportcontainer eine erste Kammer zur Aufnahme von Transportgegenständen und eine zweite Transportkammer zur Aufnahme von Transportgegenständen auf. Die erste Kammer weist eine zur zweiten Kammer weisenden Begrenzungswand auf, wobei die Begrenzungswand derart ausgestaltet ist, dass durch die Begrenzungswand eine Verbindungsöffnung zwischen der ersten Kammer und der zweiten Kammer öffnenbar ist, wobei durch die Begrenzungswand die maximale Fallhöhe der Transportgegenstände begrenzbar ist.

Durch die voneinander getrennten Kammern, die bei Bedarf miteinander verbunden werden können, ist es möglich, die Transportgegenstände vergleichbar zu Schüttgut auszukippen, ohne dass die Gefahr besteht, dass die Transportgegenstände beim Ausschütten beschädigt werden. Die Transportgegenstände können insbesondere auf ein Transportband gekippt werden, von dem aus die Transportgegenstände zu weiteren logistisch relevanten Stationen weitertransportiert werden können, um beispielsweise die Transportgegenstände in Abhängigkeit von ihrem beabsichtigten nächsten oder endgültigen Zielort zu sortieren und im sortienen Zustand weitertransportieren zu können. Der zur jeweiligen Kammer weisende Teil des Transportbands weist insbesondere einen möglichst hohen Reibungswert auf, so dass auf das Transportband ankommende Transportgegenstände zunächst gestoppt werden können.

Durch das Transportband kann dadurch ein durch das Auskippen der Transportgegenstände verursachter Schüttkegel vermieden werden. Insbesondere kann durch das Transportband sichergestellt werden, dass die Transportgegenstände von unten her entladen werden können. Gleichzeitig kann durch die Geschwindigkeit des Transportbands die Entladegesehwindigkeit sowie die innerhalb des Transportcontainers auftretenden Geschwindigkeiten der Transportgegenstände kontrolliert werden.

Beispielsweise kann ein Lastkraftwagen, insbesondere Kippsattelzug, der mit dem erfindungsgemäßen Transportcontainer versehen ist, über eine Hubvorrichtung den Transportcontainer kippen, so dass der Transportcontainer über eine entgegen der Fahrtrichtung weisende Ausgangsöffnung den Inhalt der zweiten Kammer über eine geringe Fallhöhe auskippen kann. Der Transportcontainer muss hierzu nicht von dem Fahrzeug gelöst werden, sondern kann gemeinsam mit dem Fahrzeug und/oder einer Wechselbrücke gekippt werden. Anschließend kann die Verbindungsöffnung zwischen der ersten Kammer und der zweiten Kammer geöffnet werden, so dass die Transportgegenstände der ersten Kammer über eine vergleichsweise geringe Fallhöhe in die benachbarte zweite Kammer rutschen können. Beispielsweise kann die Ausgangsöffnung der zweiten Kammer geschlossen sein, so dass die Transportgegenstände zunächst gestoppt werden. Die aus der ersten Kammer kommenden Transportgegenstände können aber auch durch andere Maßnahmen innerhalb der zweiten Kammer gestoppt und/oder gebremst werden, beispielsweise indem die Transportgegenstände der zweiten Kammer noch nicht vollständig entladen sind und die Bewegung der nachkommenden Transportgegenstände aus der ersten Kammer sperren und/oder hemmen. Anschließend können die Transportgegenstände aus der ersten Kammer über die geöffnete Ausgangsöffnung der zweiten Kammer wiederum über eine geringe Fallhöhe ausgekippt werden. Selbst bei einer größeren Anzahl von Kammern ist es dadurch möglich, die Transportgegenstände sukzessive über vergleichsweise geringe Fallhöhen von der einen Kammer zur nächsten Kammer rutschen zu lassen, bis die Transportgegenstände schließlich beispielsweise auf ein Förderband, welches die Transportgegenstände zur weiteren Verteilung und/oder Sortierung weiterleiten kann, ausgekippt werden können. Im Gegensatz zu Schüttgut, bei dem eine Beschädigung bei einem Fall aus einer größeren Höhe nicht zu befürchten ist, können durch die Begrenzung der Fallhöhen Postpakete als Transportgegenstände ausgekippt werden ohne eine Beschädigung der Postpakete befürchten zu müssen. Erst die Begrenzung der maximalen Fallhöhe durch die Begrenzungswand zwischen benachbarten Kammern ermöglicht den Einsatz von für Schüttgut bekannte Technologien bei der Entladung von Stückgut, wie Postpakete . Dies ermöglicht die Entladung bruchgefährdeter Stückgüter, wie Postpakete durch einen Kippvorgang.

Insbesondere ist es möglich alle Kammern gleichzeitig zu öffnen, um die Transportgegenstände aller Kammern gleichzeitig auszukippen. Hierzu können beispielsweise mehrere oder sämtliche Verbindungsöffnungen gleichzeitig geöffnet sein. Insbesondere können die einzelnen Transportgegenstände an einer Begrenzung der Verbindungsöffnung beispielsweise durch die Begrenzungswand verzögert und/oder kurzzeitig gestoppt werden, wodurch zu große Geschwindigkeiten für die Transportgegenstände vermieden werden können. Dies ist insbesondere der Fall, wenn der effektive Öffnungsquerschnitt für die Transportgegenstände kleiner als die gesamte Seite der jeweiligen Kammer ist, so dass sich eine Lücke ergibt, die als ein geschwindigkeitsverzögernder Flaschenhals wirkt. Ferner kann ein nachrutschender Transportgegenstand an einem in Rutschrichtung vor ihm verzögerten Transportgegenstand anstoßen und gebremst werden. Ein ankommender Transportgegenstand kann von den bereits insbesondere im Bereich der Durchgangsöffnung vorhandenen Transportgegenständen gebremst werden und gleichzeitig einen in Rutschrichtung vor ihm positionierten Transportgegenstand weiter drücken. Eine Beschädigung der Transportgegenstände durch einen zu starken Aufprall nach einer ungebremsten Bewegung wird dadurch vermieden. Durch die Verbindung der benachbarten Kammern über die Verbindungsöffnung kann die Rutschgeschwindigkeit der Transportgegenstände begrenzt und erforderlichenfalls verlangsamt werden, so dass auch bei der Bewegung der Transportgegenstände von der einen Kammer in die nächste Kammer eine Beschädigung vermieden ist. Durch die Unterteilung des Transportcontainers in mindestens zwei Kammern, die über definierte Verbindungsöffnungen für die Bewegung der Transportgegenstände innerhalb de Containers miteinander verbunden sind, kann die Bewegung der Transportgegenstände soweit kontrolliert und begrenzt werden, dass Beschädigungen der Transportgegenstände selbst dann vermieden werden, wenn die Transportgegenstände vergleichbar zu Schüttgut aus dem Transportcontainer ausgekippt werden.

Als Transportgegenstände können insbesondere für den Postverkehr geeignete Pakete verwendet werden, die vergleichbar zur Schüttgut aus dem Transportcontainer ausgeschüttet werden können, wobei durch die Begrenzungsmöglichkeit der Fallhöhen und der Begrenzungsmöglichkeit der auftretenden Geschwindigkeiten der Transportgegenstände das Risiko einer Beschädigung der bruchgefährdeten Transportgegenstände nicht erhöht wird. Die Möglichkeit, die Transportgegenstände im Wesentlichen gefahrlos ausschütten zu können, vereinfacht das Entladen der Transportgegenstände und ermöglicht ein besonders schnelles Entladen. Dadurch kann die Standzeit des Transportcontainers reduziert und eine effizientere Auslastung des Transportcontainers sowie des zum Transport des Transportcontainers verwendeten Lastkraftwagens erreicht werden. Dies ermöglicht es bis zu einem späteren Zeitpunkt Pakete anzunehmen ohne die nachfolgenden Logistikprozesse zu beeinträchtigen oder eine Verzögerung der nachfolgenden Zustellung in Kauf nehmen zu müssen. Insbesondere wird vermieden, den Transportcontainer von Hand zu entladen, wodurch die Kosten für die Handhabung der Transportgegenstände deutlich reduziert sind. Die einzelnen Kammern des Transportcontainers können insbesondere derart positioniert werden, dass bei einer Schrägstellung des Transportcontainers in Bezug zu einer Horizontalen, die erforderlich ist, um ein Rutschen der Transportgegenstände von einer Kammer in die nächste Kammer zu ermöglichen, die sich dadurch einstellende maximale Fallhöhe unter Berücksichtigung des Bremseffekts bei der Bewegung der Transportgegenstände durch die Verbindungsöffnung eine Beschädigung der Transportgegenstände sicher vermeidet. Hierbei kann ausgenutzt werden, dass beim Transport von Gegenständen mit Hilfe von Paketen diese Gegenstände innerhalb des Pakets immer derart geschützt sein sollen, dass sie einen Fall aus einer bestimmten Mindesthöhe ohne Beschädigung überstehen müssen.

In einer besonders bevorzugten Ausführungsform ist die Begrenzungswand formflexibel, insbesondere elastisch, ausgestaltet, wobei die Begrenzungswand insbesondere durch mindestens eine eingeschlossene Luftschicht gepolstert ist und/oder überlappende Streifen flexiblen Materials aufweist. Durch die formflexible Ausgestaltung der Begrenzungswand wird eine Nachgiebigkeit und/oder Elastizität der Begrenzungswand erreicht, die ein Anstoßen eines Transportgegenstands an die Begrenzungswand dämpfen und/oder abfedern kann. Die Begrenzungswand weist insbesondere eine Oberfläche auf, die das Gleiten der Transportgegenstände an der Begrenzungswand unterstützt. Hierzu kann beispielsweise eine Oberflächenbeschichtung und/oder eine spanende oder spanlose Oberflächenbehandlung der Begrenzungswand vorgesehen sein, die im Vergleich zu üblichen Stahllackierungen einen geringeren Reibungsbeiwert aufweisen. Die Begrenzungswand ist beispielsweise mit einem Polstermaterial, beispielsweise Watte, Wolle, Kunststoffvlies und/oder mit eingeschlossener Luft gepolstert, um bei anstoßenden Transportgegenständen eine ausreichende Nachgiebigkeit bereitzustellen, die eine Beschädigung der Transportgegenstände verhindert. Insbesondere ist die Begrenzungswand zumindest in einem Teilbereich über die gesamte Dicke der Begrenzungswand formflexibel ausgestaltet. Vorzugsweise ist die Begrenzungswand vollständig formflexibel ausgestaltet, indem die Begrenzungswand beispielsweise aus einem elastomeren Material hergestellt ist, das auf einen stabilen Rahmen aufgespannt sein kann. Die Begrenzungswand kann auch als Pendeltor oder Pendeltür ausgeführt sein, wobei das Blatt des Pendeltores oder der Pendeltür mit überlappenden Streifen flexiblen Materials ausgebildet sein können. Beispielsweise ist die erste Kammer im Wesentlichen quaderförmig ausgestaltet und die formflexible Begrenzungswand bildet einen Großteil einer Seitenwand des Quaders, wobei diese Seitenwand zum Freigeben der Verbindungsöffnung ganz oder teilweise wegbewegt, insbesondere weggeklappt werden kann. Die formflexible Ausgestaltung der Begrenzungswand verhindert auch bei einer größeren Fallhöhe für einen Transportgegenstand innerhalb der ersten Kammer eine Beschädigung des Transportgegenstands. Dies ermöglicht es für die erste Kammer eine größere Erstreckung in Kipprichtung vorzusehen. Für die Kammern des Transportcontainers können dadurch größere Volumina gewählt werden, die leichter beladen werden können.

Vorzugsweise enthält die erste Kammer und/oder die zweite Kammer ein Führungselement, wobei das Führungselement formflexibel ausgestaltet ist und durch sein Volumen und/oder sein Gewicht eine vordefinierte Bewegungsrichtung der Transportgegenstände hemmt und/oder sperrt. Das Führungselement kann nachgiebig und/oder elastisch ausgestaltet sein, so dass eine Beschädigung der Transportgegenstände innerhalb einer Kammer durch das Führungselement vermieden wird. Das Führungselement kann beispielsweise aufgrund seines Gewichts verhindern, dass ein Transportgegenstand gegen die Schwerkraftrichtung beim Entladen unkontrolliert durch die Luft bewegt und in eine ungewollte Richtung bewegt wird. Ferner kann das Führungselement ein Volumen innerhalb des Gehäuses ausfüllen, in das die Transportgegenstände beim Ausladen nicht bewegt werden sollen. Das Führungselement ist hierzu insbesondere zum größten Teil von der Begrenzung der jeweiligen Kammer beabstandet, wobei das Führungselement die Begrenzung eher kleinflächig und/oder punktuell berühren kann. Die Kontaktfläche des Führungselements mit der Begrenzung der jeweiligen Kammer beträgt insbesondere ≤ 10 %, vorzugsweise ≤ 5 % und besonders bevorzugt ≤ 1 % der Gesamtoberfläche des Führungselementes. Das Führungselement kann beispielsweise als ein aufblasbarer Ballon ausgestaltet sein, der ein nicht benötigtes Volumen innerhalb der jeweiligen Kammer ausfüllt und beispielsweise lediglich im Bodenbereich ein definiertes Rutschen der Transportgegenstände erlaubt. Gleichzeitig kann das Führungselement als Prallschutz dienen, wodurch eine Beschädigung der Transportgegenstände beim Auskippen vermieden wird.

Insbesondere ist die Begrenzungswand um eine im Wesentlichen horizontale Achse schwenkbar. Dadurch kann die Begrenzungswand in einer gekippten Stellung des Transportcontainers durch ihr Eigengewicht aufschwingen und die Verbindungsöffnung freigeben. Gleichzeitig kann der obere Rand der Verbindungsöffnung durch die bewegbare Begrenzungswand ausgebildet werden, so dass ein größerer Gegenstand die Begrenzungswand zusätzlich aufdrückt, um durch die Verbindungsöffnung heraus zugelangen. Bei einem Kontakt eines Transportgegenstandes mit der Begrenzungswand kann die Geschwindigkeit des Transportgegenstandes durch die Begrenzungswand reduziert werden, wodurch unnötig starke Stöße auf den Transportgegenstand sowie durch den Transportgegenstand vermieden werden können. Das Ausschütten der Transportgegenstände kann dadurch einfach und ohne erhöhte Gefahr einer Beschädigung der Transportgegenstände umgesetzt werden. Insbesondere können nacheinander sämtliche zum Ausladen der Transportgegenstände erforderlichen Transportwände bzw. Klappen automatisch geöffnet werden. Hierzu können die Begrenzungswände bzw. Klappen entriegelt werden, so dass die Begrenzungswand der ersten Kammer automatisch aufschwingt, wenn die Transportgegenstände der zweiten Kammer soweit entladen sind, dass das Aufschwingen der Begrenzungswand nicht mehr durch die Transportgegenstände innerhalb der zweiten Kammer gesperrt wird. Dies ermöglicht ein im Wesentlichen gleichmäßiges und kontrolliertes Entladen der Transportgegenstände beim Auskippen.

Insbesondere weist die erste Kammer einen Boden auf und die Verbindungsöffnung erstreckt sich bis zum Boden, wobei insbesondere zwischen der Begrenzungswand und dem Boden ein Abstand verbleibt. Eine Kante im Bereich der Verbindungsöffnung, welche das Rutschen von Transportgegenständen durch die Verbindungsöffnung stören könnte, wird dadurch vermieden. Insbesondere geht der Boden der ersten Kammer im Wesentlichen absatzlos in einen Boden der zweiten Kammer über, wobei zwischen der ersten Kammer und der zweiten Kammer lediglich ein Spalt zwischen den jeweiligen Böden von den Transportgegenständen zu überwinden ist. Durch den Abstand zwischen dem Boden und der Trennwand kann durch eine vergleichsweise geringe Bewegung der Begrenzungswand schnell eine ausreichend große Verbindungsöffnung geöffnet werden, um Post-Pakete von der ersten Kammer zur zweiten Kammer rutschen zu lassen. Wenn die Trennwand beispielsweise schwenkbar an einem oberen Rand angelenkt ist, ist nur ein geringer Kippwinkel des Transportcontainers erforderlich, um eine ausreichende große Verbindungsöffnung bereit zu stellen. Da insbesondere die erste Kammer sich im Wesentlichen direkt an die zweite Kammer anschließen kann, kann durch ein Gehäuse der zweiten Kammer der durch den Abstand freibleibende Bereich der ersten Kammer vor Witterungseinflüssen geschützt werden. Zusätzlich oder alternativ kann der durch den Abstand freibleibende Bereich durch eine bewegbare und/oder lösbare Abdeckung verschlossen werden. Der Abstand d beträgt insbesondere 5cm ≤ d ≤ 50cm, vorzugsweise 10cm ≤ d ≤ 40cm, weiter bevorzugt 15cm ≤ d ≤ 30cm und besonders bevorzugt 20cm ≤ d ≤ 25cm.

Vorzugsweise weist die zweite Kammer eine zur ersten Kammer weisende Trennwand auf, wobei die Trennwand derart ausgestaltet ist, dass durch die Trennwand die Verbindungsöffnung zwischen der ersten Kammer und der zweiten Kammer zumindest teilweise öffnenbar ist. Die erste Kammer und die zweite Kammer können dadurch als individuelle Transportboxen ausgestaltet werden, die bei Bedarf auch jeweils für sich alleine für den Transport von Transportgegenständen verwendet werden können. Die erste Kammer sowie die zweite Kammer können somit ein eigenes Gehäuse aufweisen, das beispielsweise eine im Wesentlichen quaderförmige Begrenzung der jeweiligen Kammer bereitstellt.

In einer bevorzugten Ausführungsform ist die erste Kammer durch eine erste Transportbox und die zweite Kammer durch eine zweite Transportbox ausgebildet, wobei die erste Transportbox und die zweite Transportbox, insbesondere lösbar, mit einem gemeinsamen Wechselrahmen verbunden sind. Über den Wechselrahmen kann der aus den Transportboxen zusammengesetzte Transportcontainer einfach mit einem Sattelschlepper verbunden werden. Gleichzeitig kann der Wechselrahmen ausklappbare Stützbeine aufweisen, so dass der Transportcontainer zusammen mit dem Wechselrahmen einfach abgestellt werden kann. Ferner kann der Transportcontainer mit Hilfe der Stützbeine derart abgestellt werden, dass sich der Boden des Transportcontainers auf einem erhöhten Niveau befindet, so dass der Transportcontainer ohne Zuhilfenahme zusätzlicher Maschinen leicht wieder an einen Sattelschlepper angekoppelt werden kann. Die Abmessungen der jeweiligen Transportbox sind insbesondere derart gewählt, dass die Transportbox auf einem VAN oder LKW, insbesondere Niederflurfahrzeug, aufgesetzt werden kann.

Insbesondere weist die zweite Kammer eine von der ersten Kammer wegweisende Begrenzungswand auf, wobei die Begrenzungswand derart ausgestaltet ist, dass durch die Begrenzungswand eine Verbindungsöffnung öffnenbar ist, wobei insbesondere mehr als eine zweite Kammer vorgesehen ist. Dadurch, dass die zweite Kammer, vergleichbar zur ersten Kammer mit einer Begrenzungswand ausgestaltet werden kann, ist es möglich, mehrere zweite Kammern nebeneinander anzuordnen und dadurch einen Transportcontainer mit einem entsprechend großen Transportvolumen auszubilden. Insbesondere kann der Transportcontainer durch die erste Kammer und die mehreren zweiten Kammern modular zusammengesetzt werden, so dass das aktuell benötigte Transportvolumen über die Anzahl der verwendeten zweiten Kammern bedarfsgerecht eingestellt werden kann.

Vorzugsweise weist die erste Kammer und/oder die zweite Kammer eine Klappe auf, wobei die Klappe insbesondere eine Öffnungsbewegung quer zur Fahrtrichtung aufweist und die Klappe vorzugsweise um eine im Wesentlichen horizontale Achse schwenkbar ist. Über die Klappe können die Transportgegenstände in eine Richtung quer zur Fahrtrichtung aus dem Transportcontainer ausgekippt werden. Dies erleichtert es, den Transportcontainer mit Hilfe eines Lastkraftwagens an ein Förderband heranzufahren, das seitlich neben der Fahrtrichtung des Lastkraftwagens angeordnet ist. Ferner ist es möglich durch die Änderung der Kipprichtung eine verstopfte Durchgangsöffnung frei zu bekommen und/oder die Transportgegenstände über eine alternative Öffnung zu entladen, so dass beispielsweise die Transportgegenstände sowohl an einer entgegen der Fahrtrichtung weisenden Stirnseite des Transportcontainers als auch an einer quer zur Fahrtrichtung weisenden Längsseite des Transportcontainers ausgekippt werden können.

Die Erfindung betrifft ferner ein Transportfahrzeug, insbesondere Lastkraftwagen, mit einem auswechselbaren befestigten Transportcontainer, der wie vorstehend beschrieben, aus- und weitergebildet sein kann und zum Transportieren und Ausschütten von Post-Paketen verwendet wird. Der Transportcontainer kann insbesondere als Wechselbrücke ausgestaltet sein und/oder mit einem Sattelschlepper lösbar verbunden werden. Das Transportfahrzeug kann die Transportcontainer insbesondere mit Hilfe einer Hubvorrichtung in eine gekippte Stellung bringen, um dadurch die vom Transportcontainer aufgenommenen Transportgegenstände auskippen zu können. Dies vereinfacht das Entladen der Transportgegenstände. Da die Transportgegenstände sukzessive von der ersten Kammer zur zweiten Kammer und von der zweiten Kammer weiter rutschen können, werden zu große Fallhöhen für die Transportgegenstände vermieden, wodurch das Risiko die Transportgegenstände beim Ausschütten nicht erhöht ist.

Die Erfindung betrifft ferner ein Verfahren zum Entladen eines Transportcontainers, der wie vorstehend beschrieben, aus- und weitergebildet sein kann, wobei der Transportcontainer zum Transportieren und Ausschütten von Post-Paketen verwendet wird. Bei dem Verfahren wird die zweite Kammer, die mindestens einen Transportgegenstand enthält, im Bereich einer Ausgangsöffnung geöffnet. Der Transportcontainer wird um eine erste Achse derart gekippt, dass die Ausgangsöffnung im Vergleich zu Transportgegenständen geodätisch tiefer positioniert ist. Die Transportgegenstände rutschen über die Ausgangsöffnung aus der zweiten Kammer heraus. Gleichzeitig und/oder nachfolgend wird die Verbindungsöffnung zwischen der ersten Kammer, die mindestens einen Transportgegenstand enthält, und der zweiten Kammer geöffnet. Der Transportgegenstand rutscht über die Verbindungsöffnung von der ersten Kammer zu der zweiten Kammer. Das Verfahren kann insbesondere wie vorstehend anhand des Transportcontainers beschrieben aus- und weitergebildet sein.

Da die Transportgegenstände nicht von Hand aus den Kammern entladen werden müssen, sondern lediglich ausgekippt werden können, ist das Entladen der

Transportgegenstände vereinfacht. Da zunächst die Transportgegenstände der zweiten Kammer über eine vergleichsweise niedrige Fallhöhe ausgekippt werden können, wird eine Beschädigung dieser Transportgegenstände vermieden, so dass auch bruchgefährdete Stückgüter, wie Postpakete durch Kippen entladen werden können. Nachfolgend können die Transportgegenstände der ersten Kammer über eine vergleichsweise niedrige Fallhöhe in die zweite Kammer rutschen, wodurch ebenfalls eine Beschädigung der Transportgegenstände vermieden wird. Nachdem die Transportgegenstände von der ersten Kammer in die zweite Kammer gelangt sind, können die Transportgegenstände wiederum über eine geringe Fallhöhe aus der zweiten Kammer ausgeschüttet werden. Eine Beschädigung der Transportgegenstände beim Ausschütten wird dadurch vermieden.

Insbesondere wird der Transportcontainer um eine zweite Achse derart gekippt, dass die Verbindungsöffnung im Vergleich zum Transportgegenstand in der ersten Kammer geodätisch tiefer positioniert ist, wobei insbesondere die zweite Achse von der ersten Achse verschieden ist und vorzugsweise die zweite Achse zur ersten Achse im Wesentlichen rechtwinklig angeordnet ist. Beispielsweise kann die erste Achse im Wesentlichen in Fahrtrichtung verlaufen, so dass die Transportgegenstände, bezogen auf einen Lastkraftwagen, der den Transportcontainer transportiert, seitlich ausgekippt werden können. Die zweite Achse kann im Wesentlichen senkrecht zur Fahrtrichtung angeordnet sein, um durch ein Kippen insbesondere zur Rückseite des Transportcontainers die Transportgegenstände der ersten Kammer über die Verbindungsöffnung in die zweite Kammer zu kippen. Die Transportgegenstände werden insbesondere innerhalb der zweiten Kammer zunächst gestoppt, bevor die Transportgegenstände durch ein Schwenken des Transportcontainers um die erste Achse seitlich ausgekippt werden. Nach dem seitlichen Auskippen kann der Transportcontainer um die erste Achse wieder in die Ausgangsposition zurückgeschwenkt werden. Nach dem Zurückschwenken kann der Transportcontainer um die zweite Achse geschwenkt werden, um die Transportgegenstände einer weiteren Kammer in die mindestens eine nächste benachbarte Kammer rutschen zu lassen. Danach können diese Transportgegenstände wieder seitlich ausgekippt werden. Durch den Wechsel der Kipprichtungen für die Transportgegenstände kann eine versehentlich zu hohe Fallhöhe für die Transportgegenstände sicher vermieden werden. Gleichzeitig ist es nicht erforderlich, für jede Kammer einen seitlich zur Fahrtrichtung vorgesehenes Transportband vorzusehen. Auch ist es nicht erforderlich, dass für jede Kammer der Transportcontainer bewegt werden muss, um die auszukippenden Transportgegenstände von genau einem Transportband aufnehmen zu lassen.

In einer bevorzugten Ausführungsform wird, nachdem der Transportgegenstand von der ersten Kammer in die zweite Kammer gerutscht ist, der Transportgegenstand innerhalb der zweiten Kammer verzögert und/oder gestoppt, bevor der Transportgegenstand aus der zweiten Kammer herausrutscht und/oder in eine weitere zweite Kammer weiter rutscht. Durch die Verzögerung der Bewegungsgeschwindigkeit des Transportgegenstands, insbesondere bis zu einem Stoppen, wird die maximale kinetische Energie des Transportgegenstands begrenzt und auf einem vergleichsweise geringen Wert gehalten, so dass eine Beschädigung des Transportgegenstands vermieden ist. Insbesondere kann dadurch die effektive Fallhöhe des Transportgegenstands reduziert werden.

Vorzugsweise wird der Transportgegenstand nach einem Rutschen durch einen formflexiblen Widerstand zumindest zeitweise verzögert und/oder gestoppt, wobei der formflexible Widerstand insbesondere durch eine formflexible Begrenzungswand zum Öffnen einer Verbindungsöffnung und/oder durch eine Klappe zum Öffnen einer Ausgangsöffnung und/oder an einem Führungselement zum Hemmen und/oder Sperren einer vordefinierten Bewegungsrichtung der Transportgegenstände ausgebildet wird. Der formflexible Widerstand kann insbesondere durch sowieso vorgesehene Bauteile ausgebildet werden, so dass ein Aufprall an diesem Bauteil nicht zu einer Beschädigung des Transportgegenstands führt. Durch das Verzögern beziehungsweise sogar Stoppen der Bewegung des Transportgegenstands kann die effektive Fallhöhe und damit die maximale kinetische Energie des Transportgegenstands begrenzt werden. Das Risiko einer Beschädigung des Transportgegenstands kann dadurch reduziert werden.

Besonders bevorzugt wird nach dem Beginn des Entladens und vor dem Ende des Entladens das Volumen oder das Ausmaß des formflexiblen Widerstands verändert, insbesondere vergrößert. Beispielsweise kann ein formflexibler Widerstand in Form eines aufblasbaren Ballons innerhalb des Gehäuses des Transportcontainers vorgesehen werden, an den der Transportgegenstand weich anschlagen kann, um seine Bewegung zu verzögern und/oder zu stoppen. Anschließend kann der aufblasbare Ballon zusammengezogen werden, so dass er genügend Raum zum Weiterrutschen für den Transportgegenstand freigegeben wird. Der weiterrutschende Transportgegenstand kann hierbei insbesondere soweit rutschen, bis er auf einen weiteren aufblasbaren Ballon anschlägt usw. Ohne die Winkelstellung des Transportcontainers verändern zu müssen, kann mit Hilfe des formflexiblen Widerstands ein kontrolliertes Auskippen der beladenen Transportgegenstände erreicht werden. Dies lässt sich durch eine entsprechend gestaltete Kontrolleinrichtung, die beispielsweise ein pneumatisches System zum Aufblasen und Zusammenziehen eines beispielsweise ballonartigen formflexiblen Führungselements automatisiert werden. Durch die Kontrolleinrichtung können die formflexiblen Widerstände verändert werden und/oder das Öffnen und Schließen der Begrenzungswände gesteuert werden. Das Entladen des Transportcontainers wird dadurch weiter vereinfacht, ohne die Gefahr einer Beschädigung des Transportgegenstandes zu erhöhen.

Vorzugsweise kann als eine Kammer des vorstehend beschriebenen Transportcontainers eine Transportbox verwendet werden, die insbesondere für einen Kleinlaster, Van und/oder LKW mit Transportrahmen geeignet ist, wobei die Transportbox ein Gehäuse zur Aufnahme von Transportgegenständen, insbesondere Paketen, aufweist. Innerhalb des Gehäuses ist mindestens ein Führungselement angeordnet, wobei das Führungselement erfindungsgemäß formflexibel ausgestaltet ist und durch sein Volumen und/oder durch sein Gewicht eine vordefinierte Bewegungsrichtung der Transportgegenstände hemmt und/oder sperrt. Gleichzeitig zum Sperren und/oder Hemmen der vordefinierten Bewegungsrichtung kann das Führungselement eine Bewegung der Transportgegenstände entlang eines Ausladewegs zulassen. Insbesondere kann die Transportbox wie vorstehend anhand der ersten Kammer und der zweiten Kammer erläutert aus- und weitergebildet sein.

Dadurch, dass das Führungselement eine ungewollte Bewegung entlang vordefinierter Bewegungsrichtungen der Transportgegenstände hemmt oder sogar sperrt, kann eine bevorzugte Bewegungsrichtung der Transportgegenstände während des Ausladens vorgegeben werden. Insbesondere ist es möglich, die Transportgegenstände vergleichbar zu Schüttgut aus der Transportbox auszuschütten und sie beispielsweise mit Hilfe eines Transportbandes weiter zu transportieren. Aufgrund des mindestens einen Führungselements kann vermieden werden, dass verschiedene Transportgegenstände unkontrolliert durch das Innere des Gehäuses fallen und beschädigt werden können beziehungsweise andere Transportgegenstände beschädigen. Insbesondere ist es möglich, die Transportgegenstände durch ein Kippen der Transportbox aus dem Gehäuse der Transportbox herausrutschen zu lassen. Dies kann besonders schnell und zeiteffizient erfolgen. Insbesondere können mehrere Transportboxen gleichzeitig entladen werden. Hierzu können beispielsweise mehrere Transportboxen, die jeweils zueinander im Wesentlichen parallele Ausladewege zur selben Seite hin aufweisen, mit einem gemeinsamen Wechselrahmen verbunden sein, um insbesondere einen Transportcontainer auszubilden, wobei der Wechselrahmen zum Ausladen zur Seite gekippt werden kann. Ferner kann das Entladen der Transportbox automatisiert werden oder zumindest soweit vereinfacht werden, dass eine Entladung der Transportbox von Hand nicht erforderlich ist. Aufgrund der formflexiblen Ausgestaltung des Führungselements kann das Führungselement nachgiebig und/oder elastisch ausgestaltet sein, so dass eine Beschädigung des Transportguts durch das Führungselement vermieden wird. Insbesondere kann das Führungselement derart ausgestaltet sein, dass bei einer hinreichenden Kraft ein Transportgegenstand auch gegen den Widerstand des Führungselements entnommen und/oder in das Gehäuse hineingesteckt werden kann. Aufgrund des formflexiblen Führungselements sind Rampen mit starren Seitenwänden und/oder Regale mit starren Seitenwänden, welche das Transportgut beschädigen könnten, nicht erforderlich. Das Führungselement kann beispielsweise aufgrund seines Gewichts verhindern, dass ein Transportgegenstand entgegen der Schwerkraftrichtung beim Entladen unkontrolliert durch die Luft bewegt und in eine ungewollte Richtung bewegt wird. Ferner kann das Führungselement ein Volumen innerhalb des Gehäuses ausfallen, in das die Transportgegenstände beim Ausladen nicht bewegt werden sollen. Das Führungselement ist hierzu insbesondere zum größten Teil von dem Gehäuse der Transportbox beabstandet, wobei das Führungselement das Gehäuse eher kleinflächig und/oder punktuell berühren kann. Die Kontaktfläche des Führungselements mit dem Gehäuse der Transportbox beträgt insbesondere ≤ 10%, vorzugsweise ≤ 5% und besonders bevorzugt ≤ 1% der Gesamtoberfläche des Führungselements.

Insbesondere weist das Gehäuse eine Ausgangsöffnung auf Ferner ist das Führungselement vorzugsweise derart positioniert, dass ein vordefinierter Ausladeweg der einzelnen Transportgegenstände auf die Ausgangsöffnung zu freigegeben ist. Durch das Führungselement können Bewegungsrichtungen, die von dem Ausladeweg verschieden sind, gehemmt oder gesperrt werden. Eine vollständige Bewegungsunfähigkeit der Transportgegenstände wird vermieden. Die Transportgegenstände können dadurch mit einer höheren Wahrscheinlichkeit entlang des vordefinierten Ausladewegs auf die Ausgangsöffnung zu und durch diese hindurch bewegt werden. Insbesondere können die Transportgegenstände entlang des Ausladewegs zu der Ausgangsöffnung rutschen. Besonders bevorzugt rutschen zunächst die untersten Transportgegenstände durch die Ausgangsöffnung, wobei die oberhalb angeordneten Transportgegenstände von dem Führungselement zurückgehalten werden. Hierzu weist der Ablageboden der Transportbox insbesondere einen geringeren Reibungskoeffizienten auf als die Transportgegenstände. Nachdem die unteren Transportgegenstände über die Ausgangsöffnung herausgerutscht sind, gelangen die oberen Transportgegenstände nach unten und können ebenfalls über die Ausgangsöffnung herausrutschen. Eine hohe Fallhöhe der oberen Transportgegenstände wird dadurch vermieden, da sie allmählich stufenweise bis zum Ablageboden der Transportbox gelangen bevor sie entladen werden.

Besonders bevorzugt ist eine Bewegungsrichtung quer zum Ausladeweg durch das Führungselement gehemmt oder gesperrt. Dadurch wird eine bevorzugte Rutschrichtung entlang des Ausladewegs ermöglicht, wobei gleichzeitig ein Blockieren der Transportgegenstände beim Ausladen vermieden wird. Um beim Ausladen der Transportbox, beispielsweise bei einem Auskippen der Transportgegenstände durch Rutschen, einen vordefinierten Ausladeweg vorzugeben, reicht es bereits aus, wenn der Widerstand für einen Transportgegenstand entlang des vordefinierten Ausladewegs geringer ist als ein Widerstand entlang der vordefinierten Bewegungsrichtungen in eine Richtung verschieden zum Ausladeweg. Besonders bevorzugt sind die Materialeigenschaften, insbesondere die Flexibilität, des Führungselements derart gewählt, dass eine Widerstandskraft F_{A} entlang des Ausladewegs geringer als eine Widerstandskraft F_{B} entlang der vom Ausladeweg verschiedenen Bewegungsrichtung ist. Hierbei gilt für das Verhältnis von F_{A}/F_{B} 0,001 ≤ F_{A}/F_{B} ≤ 0,9, insbesondere 0,01 ≤ F_{A}/F_{B} ≤ 0,7, vorzugsweise 0,1 ≤ F_{A}/F_{B} ≤ 0,5 und besonders bevorzugt 0,2 ≤ F_{A}/F_{B} ≤ 0,4. Die Widerstandskraft F_{A} entlang des Ausladewegs wird insbesondere durch die Reibung zwischen dem jeweiligen Transportgegenstand und dem Untergrund bestimmt. Die Widerstandskraft F_{B} entlang der von Ausladeweg verschiedenen Bewegungsrichtung wird maßgeblich durch die vom Führungselement bereitgestellte Gegenkraft gebildet, wenn ein Transportgegenstand in eine vom Ausladeweg verschiedene Bewegungsrichtung auf das Führungselement einer Kraft ausübt. Die Widerstandskraft F_{B} ist also größer als die reine Reibungskraft entlang des Ausladewegs. Die Widerstandskraft F_{B} des Führungselements kann insbesondere in Bezug auf eine angreifende Kraft progressiv ausgebildet sein. Die oben angeführten Verhältnisse von F_{A}/F_{B} werden daher insbesondere bei einer an dem Transportgegenstand angreifenden Kraft quer zur Schwerkraftrichtung von 1 N pro 1 kg Gewicht des Transportgegenstands ermittelt.

Vorzugsweise ist das Führungselement zum teilweisen Anliegen bei den Transportgegenständen flächig ausgestaltet. Das Führungselement kann beispielsweise im Wesentlichen waagrecht ausgeführt sein und vergleichbar zu einer Decke auf den Oberseiten der obersten Lage der Transportgegenstände aufliegen. Das Führungselement kann auch vergleichbar zu einem Vorhang im Wesentlichen vertikal ausgerichtet sein, so dass die Führungselemente im unteren Bereich auf den Transportgegenständen aufliegen und durch das Gewicht des aufliegenden Teils der Führungselemente eine ungewollte Bewegung vermeiden.

Besonders bevorzugt weist das Führungselement formfeste Gewichte auf. Durch die Gewichte kann die Nachgiebigkeit des formflexiblen Führungselements verringert werden, da eine an dem Führungselement angreifende Kraft gegen die Gewichtskraft zumindest eines Teils der Gewichte arbeiten muss.

Insbesondere ist das Führungselement mit dem Gehäuse, insbesondere im Dachbereich des Gehäuses verbunden. Dadurch, dass das Führungselement mit dem Gehäuse fixiert werden kann, wird ein Verrutschen des Führungselements vermieden. Dadurch kann sichergestellt werden, dass das Führungselement immer in der beabsichtigen Position verbleibt. Auch bei einem Kippen der Transportbox ist die Position des Führungselements gesichert, so dass das Führungselement beim Entladen in seiner Funktion nicht beeinträchtigt wird. Gleichzeitig wird vermieden, dass das Führungselement zusammen mit den Transportgegenständen entladen wird. Dadurch, dass das Führungselement insbesondere mit dem Dachbereich des Gehäuses verbunden ist, wird erreicht, dass ein Rutschen der Transportgegenstände durch das Führungselement nicht beeinträchtigt wird.

Besonders bevorzugt ist das Führungselement oder eine Vielzahl von Führungselementen über ein Befestigungsmittel lösbar mit dem Gehäuse befestigt. Dadurch ist es möglich, je nach Bedarf, ein oder mehrere Führungselemente in dem Gehäuse vorzusehen. Beispielsweise kann es in einem Fall, bei dem das Gehäuse mit besonders vielen Transportgegenständen gefüllt ist, ausreichend sein, weniger Führungselemente vorzusehen, die nur ein geringes Volumen einnehmen. Wenn dagegen ein besonders großes ungenutztes Volumen verbleibt, kann es vorteilhaft sein, entsprechend viele Führungselemente vorzusehen, die das verbleibende Restvolumen ausfüllen.

In einer bevorzugten Ausführungsform ist das Führungselement zur Volumenveränderung aufblasbar. Das Führungselement kann vergleichbar zu einem Ballon ein größeres Volumen einnehmen, wenn es aufgeblasen wird. Dadurch ist es möglich, mit Hilfe eines einzigen Führungselements oder einer besonders geringen Anzahl von Führungselementen hinreichend viel Volumen auszufüllen, um eine Bewegung der verschiedenen Transportgegenstände in ungewollte Bewegungsrichtungen zu vermeiden. Bei Bedarf kann aus dem Führungselement Luft oder ein anderes Fluid abgelassen werden, um ein geringeres Volumen für das Führungselement einzustellen. Ferner ergibt sich durch die aufblasbare Ausgestaltung des Führungselements eine Nachgiebigkeit des Führungselements, die maßgeblich über den angelegten Innendruck des Führungselements eingestellt werden kann.

In einer weitem Ausführungsform ist mindestens ein Führungselement mit einer Haltestange verbunden und entlang der Haltstange verschiebbar ausgeführt, um einen Vorhang auszubilden. Dadurch ist es möglich, das Führungselement beispielsweise beim Abholen von Paketen beiseite zu schieben, um im Wesentlichen das gesamte Transportvolumen freizugeben. Nach dem Abholen der Transportgegenstände kann der durch das mindestens eine Führungselement gebildete Vorhang vorgezogen werden, um für längere Fahrten das nicht genutzte Transportvolumen zu sperren und Beschädigungen beim Transport zu vermeiden. Beispielswiese können mehrere flexible Kunststoffbahnen als Führungselement verwendet werden, die lamellenartig nebeneinander und/oder übereinander angeordnet sind. Dadurch ist es möglich auf die Transportgegenstände eine hinreichend hohe Haltekraft auszuüben ohne dass ein Fahrer große Gewichte bewegen muss. Entsprechend seinen Möglichkeiten, kann der Fahrer jeweils eine für ihn geeignete Anzahl flexibler Kunststoffbahnen gleichzeitig bewegen, um letztendlich das Gewicht sämtlicher Führungselemente auf die Transportgegenstände wirken zu lassen.

Besonders bevorzugt weist das Gehäuse mindestens einen Ablageboden auf, wobei der Ablageboden eine Rutsch-Einrichtung aufweist. Die Rutsch-Einrichtung hemmt und/oder sperrt die vordefinierte Bewegungsrichtung der Transportgegenstände. Nicht nur das Führungselement, sondern auch der Ablageboden kann dadurch eine bevorzugte Bewegungsrichtung, insbesondere entlang eines vordefinierten Ausladewegs bereitstellen.

Die Rutsch-Einrichtung kann beispielsweise gelagerte Rollen aufweisen, die entlang der Umfangsrichtung der Rollen eine besonders geringe Widerstandskraft bereitstellen und in axialer Richtung eine Bewegung hemmen oder sperren können. Ferner kann der Ablageboden entlang der gewollten Bewegungsrichtung Streifen, beispielsweise Kunststoffstreifen, aufweisen, die im Vergleich zum übrigen Ablageboden eine geringere Reibung aufweisen. Ferner kann die Rutsch-Einrichtung eine Beschichtung aufweisen, die eine bevorzugte Rutschrichtung bereitstellt und in die übrigen Richtungen einen höheren Widerstand bereitstellt. Die Rutsch-Einrichtung kann insbesondere im Ablageboden versenkbar ausgestaltet sein. Dadurch ist es möglich, insbesondere bis zum Entladen der Transportbox eine möglichst hohe Reibung im Bereich des Ablagebodens bereitzustellen, der ein Verrutschen der Transportgegenstände erschwert.

Insbesondere weist das Gehäuse eine um eine im Wesentlichen horizontale Achse schwenkbare Klappe auf, wobei die schwenkbare Klappe insbesondere einen Großteil einer vollständigen Seite einer im Wesentlichen quaderförmigen Transportbox ausbildet. Die Klappe weist insbesondere eine Öffnungsbewegung quer zur Fahrtrichtung auf. Vorzugsweise ist die Klappe beispielsweise über ein Scharnier an einem Rahmen im Dachbereich des Gehäuses angelenkt. Mit dem Rahmen ist insbesondere auch ein Dach des Gehäuses befestigt. Der Rahmen bildet insbesondere die Kanten eines quaderförmigen Gehäuses, mit dem die einzelnen Quaderflächen befestigt sind. Die Transportbox kann entladen werden, indem die Transportbox in Richtung der schwenkbaren Klappe gekippt wird. Die Klappe kann dadurch beim Kippen von dem Gehäuse wegschwenken und eine Ausgangsöffnung freigeben. Aufgrund des mindestens einen Führungselements kann die Transportbox vergleichbar zu einer Transportbox für Schüttgut entleert werden, wobei eine Beschädigung der Transportgegenstände durch die kontrollierte Bewegung der Transportgegenstände beim Rutschen vermieden ist.

Ferner kann ein Transportfahrzeug, insbesondere einen Kleinlaster oder LKW mit Wechselrahmen, vorgesehen sein, das mit einer insbesondere auswechselbar befestigten Transportbox verbunden ist, wobei die Transportbox, wie vorstehend beschrieben, aus- und weitergebildet sein kann. Das Transportfahrzeug kann insbesondere gemeinsam mit der Transportbox gekippt werden, um die transportierten Transportgegenstände schnell ausladen zu können, ohne die Transportgegenstände beim Ausladen zu beschädigen. Insbesondere können mehrere Transportboxen mit einem Wechselrahmen eines LKWs auswechselbar verbunden sein, so dass der Wechselrahmen zusammen mit den Transportboxen vom LKW getrennt werden kann. Zu einem geeigneten Zeitpunkt kann dann der Wechselrahmen zusammen mit den Transportboxen gekippt werden, um mehrere Transportboxen gleichzeitig zu entladen. Zu diesem Zeitpunkt kann der LKW zusammen mit einem anderen Wechselrahmen bereits wieder unterwegs sein, so dass Stillstandzeiten für den LKW minimiert werden können. Die entleerten Transportboxen können anschließend mit sortierten Paketen beladen werden, wobei die Transportboxen mit einem Kleinlaster oder Van verbunden werden können, um die Pakete auszuliefern. Ferner können die entleerten Transportboxen im leeren Zustand mit einem Kleinlaster oder Van verbunden werden, um zu transportierende Transportgegenstände, wie insbesondere Pakete, aufzunehmen und zu einer Sammelstelle zu bringen. Das Transportfahrzeug kann auch als Eisenbahnwagon ausgebildet sein, mit dem vorzugsweise mehrere Transportboxen verbunden sind, die bei einem Kippen des Eisenbahnwagons gleichzeitig entladen werden können.

Ferner kann ein Verfahren zum Entladen einer Transportbox, die wie vorstehend beschrieben, aus- und weitergebildet sein kann, vorgesehen sein. Bei dem Verfahren wird die Transportbox, die mindestens einen Transportgegenstand enthält, im Bereich einer Ausgangsöffnung geöffnet. Die Transportbox wird derart gekippt, dass die Ausgangsöffnung im Vergleich zu dem Transportgegenstand geodätisch tiefer positioniert ist. Der Transportgegenstand rutscht entlang eines Ausladewegs zu der Ausgangsöffnung, wobei das Führungselement eine Bewegung des Transportgegenstands in einer zum Ausladeweg verschiedenen Bewegungsrichtung hemmt und/oder sperrt. Dadurch kann die Transportbox schnell entladen werden, wobei das mindestens eine Führungselement gleichzeitig eine Beschädigung der Transportgegenstände, insbesondere Pakete, durch eine ungewollte Bewegung vermeidet oder zumindest reduziert.

Insbesondere wird bei dem Verfahren die mindestens eine Transportbox mit einem Transportfahrzeug, insbesondere einem LKW mit Wechselrahmen, verbunden. Zumindest ein Teil des Transportfahrzeugs, beispielsweise der Wechselrahmen, wird gemeinsam mit der Transportbox gekippt. Es ist nicht erforderlich, die Transportbox vor dem Entladen von dem Transportfahrzeug oder zum zu kippenden Teil des Transportfahrzeugs zu trennen. Aufgrund der dadurch eingesparten Zeit, kann die Entladung der Transportbox weiter beschleunigt werden.

Besonders bevorzugt werden insbesondere bei einem vorherigen Beladen der Transportbox die Anzahl und/oder die Art der Führungselemente, in Abhängigkeit vom Füllgrad der Transportbox und/oder der räumlichen Anordnung der Transportgegenstände gewählt. Die Anzahl oder die Art der Führungselemente kann dadurch, je nach Bedarf, optimal gewählt werden. Hierzu werden an einem Sammelplatz oder HUB, an dem die Transportbox entladen und/oder beladen werden kann, mehrere, insbesondere verschiedene Führungselemente bereitgehalten.

Nachfolgend wird die Erfindung unter Bezugnahme auf die anliegenden Zeichnungen anhand bevorzugter Ausführungsbeispiele exemplarisch erläutert.

Es zeigen:
- Fig. 1:: eine schematische perspektivische Ansicht eines Kleinlasters mit einer Transportbox,
- Fig. 2:: eine schematische perspektivische Ansicht der Transportbox aus Fig. 1,
- Fig. 3:: eine schematische Schnittansicht der Transportbox aus Fig. 2 beim Entladen,
- Fig. 4:: eine schematische Schnittansicht der Transportbox aus Fig. 2 mit einem Führungselement in einer ersten Ausführungsform,
- Fig. 5:: eine schematische Schnittansicht der Transportbox aus Fig. 2 mit einem Führungselement einer zweiten Ausführungsform,
- Fig. 6:: eine schematische Schnittansicht der Transportbox aus Fig. 2 mit einem Führungselement in einer dritten Ausführungsform,
- Fig. 7:: eine schematische Schnittansicht eines Transportcontainers und
- Fig. 8:: eine schematische Seitenansicht eines Transportcontainers mit mehreren Kammern.

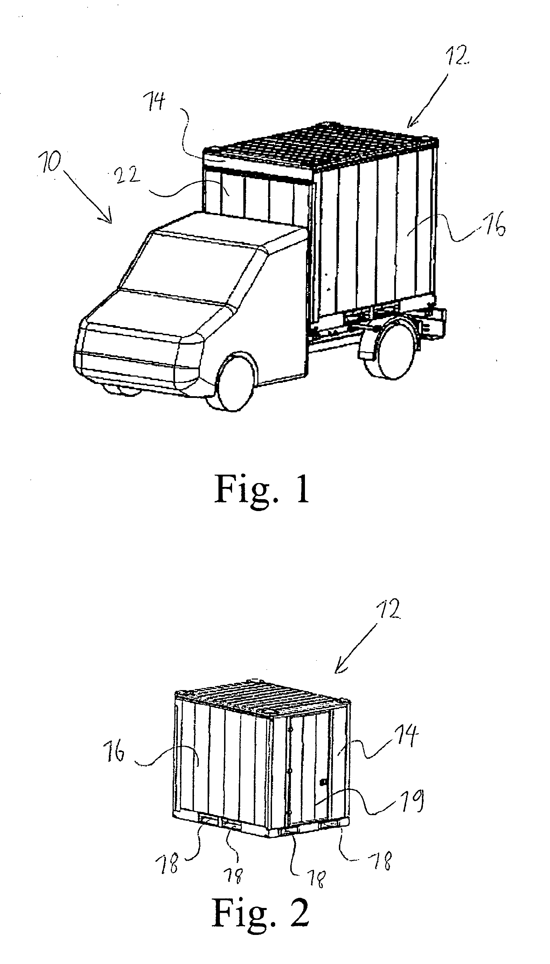

Der in Fig. 1 dargestellte Kleinlaster 10 ist mit einer Transportbox 12 lösbar verbunden. Die Transportbox 12 kann beispielsweise mit Hilfe eines Gabelstaplers von dem Kleinlaster 10 getrennt werden, und durch eine andere Transportbox 12 ersetzt werden.

Die in Fig. 2 dargestellte Transportbox 12 weist sowohl an einer Stirnseite 14 als auch an einer Längsseite 16 Öffnungen 18 zur Aufnahme von Gabeln eines Gabelstaplers auf. An der Stirnseite 14 ist ferner eine Tür 19 vorgesehen, damit Bedienpersonal in das Innere der Transportbox 12 gelangen kann, beispielsweise um Transportgegenstände einzuladen. Die Stirnseite 14 kann zusätzlich oder alternativ mit einer Klappe und/oder einem Rolltor oder ähnlichem versehen sein.

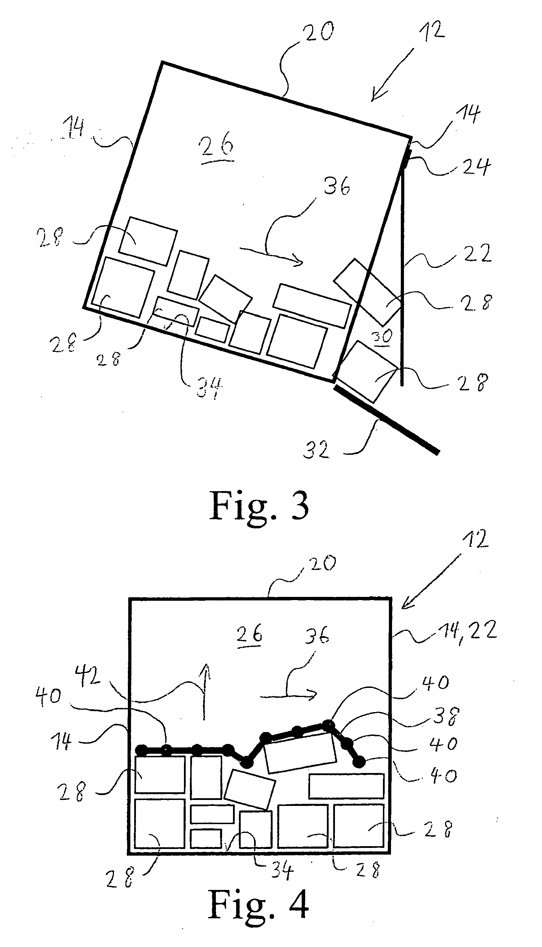

Wie in Fig. 3 dargestellt, weist die Transportbox 12 ein Gehäuse 20 auf, das an einer der Tür 19 gegenüberliegenden Stirnseite 14 eine Klappe 22 aufweist, die gelenkig über ein Scharnier 24 mit dem Gehäuse 20 in einem Dachbereich mit einem Rahmen verbunden ist. Die Klappe 22 kann über einen Riegel oder ein Schloss im geschlossenen Zustand arretiert werden. Das Gehäuse 20 weist ein Transportvolumen 26 auf, in dem mehrere Transportgegenstände 28, beispielsweise Pakete, angeordnet sind. In dem Transportvolumen können auch klappbare Regale vorgesehen sein, auf denen beispielsweise zum Ausliefern der Transportgegenstände 28 ein Teil der Transportgegenstände 28 abgelegt sein können. Bei der in Fig. 3 dargestellten gekippten Stellung der Transportbox 12 gelangen die Transportgegenstände über eine zwischen der Klappe 22 und dem Gehäuse 20 gebildeten Ausgangsöffnung 30 aus dem Transportvolumen 26 des Gehäuses heraus und werden von einem Transportband 32 aufgenommen. Hierzu können die Transportgegenstände 28 über einen Ablageboden 34 entlang eines vordefinierten Ausladewegs 36 zur Ausgangsöffnung 30 rutschen.

Wie in Fig. 4 dargestellt, kann durch ein Führungselement 38, bei dem es sich im dargestellten Ausführungsbeispiel um ein flexibles Material handelt, das formfeste Gewichte 40 aufweist, eine unerwünschte Bewegung entlang einer vordefinierten Bewegungsrichtung 42 gehemmt oder gesperrt werden. Beispielsweise kann verhindert werden, dass in einer gekippten Stellung die oberen Transportgegenstände 28 zur Ausgangsöffnung 30 fallen. Stattdessen wird sichergestellt, dass zunächst die unteren Transportgegenstände 28 entlang des vordefinierten Ausladewegs 36 auf dem Abladeboden 34 zur Ausgangsöffnung 30 rutschen und die oberen Transportgegenstände 28 zunächst bis auf den Ablageboden 34 gelangen, bevor sie zur Ausgangsöffnung 30 rutschen. Durch die Gewichte 40 drückt das Führungselement 38 genügend auf die oberen Transportgegenstände 28, so dass sich die oberen Transportgegenstände 28 nicht in Richtung einer ungewollten vordefinierten Bewegungsrichtung 42 bewegen können.

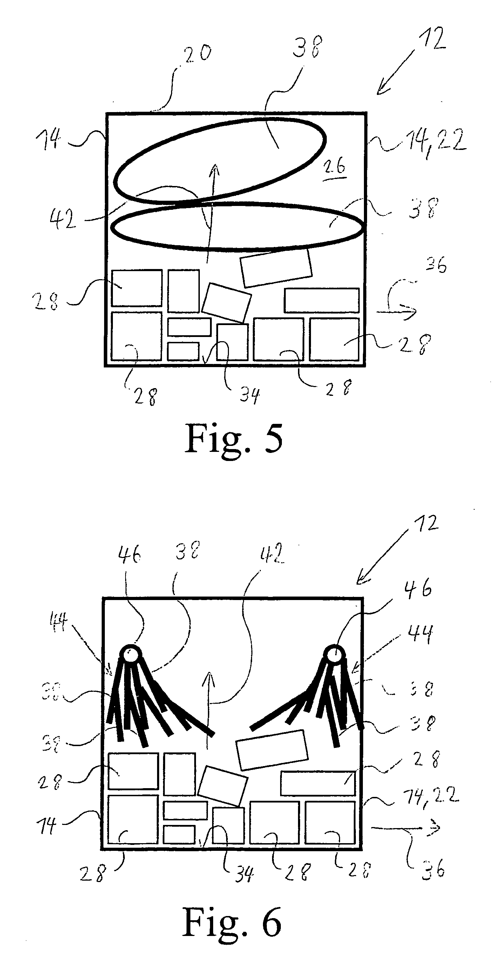

Bei der in Fig. 5 dargestellten Ausführungsform sind mehrere aufblasbare Führungselemente 38 vorgesehen, die das nicht benötigte Transportvolumen 26 im Gehäuse 20 füllen und zumindest für die Transportgegenstände 28 sperren. Durch das Volumen der Führungselemente 38 werden Bewegungen der Transportgegenstände 28 in Richtung der Bewegungsrichtung 42 gehemmt oder sogar gesperrt.

Bei der in Fig. 6 dargestellten Ausführungsform sind mehrere Führungselemente 38 zu einem Vorhang 44 zusammengefasst. Mehrere Führungselemente 38 sind bewegbar mit einer Haltestange 46 verbunden. Die verschiedenen Führungselemente 38 können flächig auf den oberen Transportgegenständen 28 aufliegen und dadurch eine Bewegung in Richtung der Bewegungsrichtung 42 hemmen oder sperren. Dadurch wird ein Widerstand bereitgestellt, der eine Bewegung nach oben hemmt oder sperrt. Auch in dieser Ausführungsform können die Führungselemente 38 aufblasbar ausgestaltet sein.

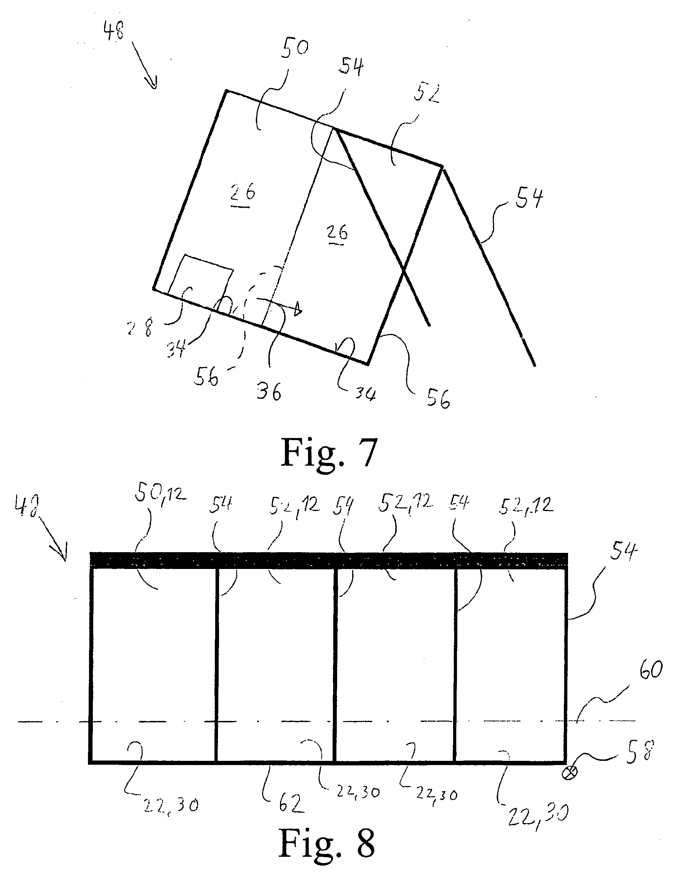

Der in Fig. 7 dargestellte Transportcontainer 48 weist eine erste Kammer 50 und eine zweite Kammer 52 auf, wobei die erste Kammer 50 und die zweite Kammer 52 jeweils als eine wie vorstehend beschriebene Transportbox 12 ausgestaltet sein kann. Im dargestellten Ausführungsbeispiel weist die erste Kammer 50 eine zur zweiten Kammer 52 weisende Begrenzungswand 54 auf, durch die eine Verbindungsöffnung 56 zwischen der Kammer 50 und der zweiten Kammer 52 geöffnet und geschlossen werden kann. Im dargestellten Ausführungsbeispiel ist die Begrenzungswand 54 in einem Dachbereich mit einem Rahmen der ersten Kammer 50 um eine horizontale Achse gelenkig verbunden. Die Begrenzungswand 54 kann insbesondere im gekippten Zustand des Transportcontainers 48 durch ihr Eigengewicht aufschwingen. Im dargestellten geöffneten Zustand der ersten Kammer 50 kann der Transportgegenstand 28 entlang einer vordefinierten Bewegungsrichtung 36 von der ersten Kammer 50 in die zweite Kammer 52 rutschen. Die Begrenzungswand 54 kann formflexibel ausgestaltet sein, indem beispielsweise eine elastomere Folie auf einem starren Rahmen aufgespannt ist. Durch die formflexible Ausgestaltung der Begrenzungswand 54 kann die Bewegung des Transportgegenstands 28 durch die Begrenzungswand 54 abgebremst werden, ohne den Transportgegenstand 28 zu beschädigen. Im dargestellten Ausführungsbeispiel erstreckt die Begrenzungswand 54 bis zum Ablageboden 34 der ersten Kammer 50 sowie der zweiten Kammer 52, so dass Stolperstellen für den Transportgegenstand 28 bei der Bewegung von der ersten Kammer 50 zur zweiten Kammer 52 vermieden sind. Im dargestellten Ausführungsbeispiel weist die zweite Kammer 52 ebenfalls eine Begrenzungswand 54 auf, die von der ersten Kammer 50 weg weist und an der von der ersten Kammer 50 entfernten Seite der zweiten Kammer 52 positioniert ist. Durch die Begrenzungswand 54 der zweiten Kammer 52 kann ebenfalls eine Verbindungsöffnung 56 geöffnet und geschlossen werden.

Wie in Fig. 8 dargestellt, kann der Transportcontainer 48 mehrere zweite Kammern 52 aufweisen, die jeweils nebeneinander angeordnet sind. Es ist möglich über die von der Klappe 22 zu öffnende Ausgangsöffnung 30 die Transportgegenstände 28 auszuladen. Hierzu kann der Transportcontainer 48 um eine erste Achse 60 gekippt werden, so dass die Transportgegenstände 28 an der Längsseite des Transportcontainers 48 ausgekippt werden können. Wenn der Transportcontainer 48 um eine zweite Achse 58 gekippt wird, können Transportgegenstände 28 von der ersten Kammer 50 zur zweiten Kammer 52 und von dort aus zur jeweils nächsten zweiten Kammer 52 befördert werden. Wenn in der letzten zweiten Kammer 52 die Transportgegenstände angekommen sind, können die Transportgegenstände über die Begrenzungswand 54 an der Stirnseite des Transportcontainers und/oder über die Ausgangsöffnung 30 er letzten zweiten Kammer 52 ausgekippt werden.

Die erste Kammer 50 und die zweiten Kammern 52, die jeweils insbesondere durch die Transportbox 12 ausgebildet sind, können mit einem gemeinsamen Wechselrahmen 62 einzeln lösbar verbunden sein, so dass der Transportcontainer 48, insbesondere als Wechselbrücke, von einem Kippsattelzug transportiert werden kann. Der Kippsattelzug weist insbesondere eine hydraulische und/oder pneumatische Kippvorrichtung auf, mit dessen Hilfe der Transportcontainer 48 um die erste Achse 58 zum Entladen der Transportgegenstände 28 gekippt werden kann. Zusätzlich beziehungsweise alternativ kann der Transportcontainer 48 zusammen mit den mit dem Wechselrahmen 62 verbundenen Transportboxen 12 als eine gemeinsame Einheit von einem Transportfahrzeug 10 abgekoppelt und später mit Hilfe einer separaten Kippvorrichtung geeignet gekippt werden, um die Transportgegenstände 28 auskippen zu können. Eine Beschädigung der Transportgegenstände 28 kann durch die formflexiblen Begrenzungswände 54 und/oder innerhalb der ersten Kammer 50 und/oder innerhalb der zweiten Kammer 52 angeordnete formflexible Führungselemente 38 verhindert werden. Nach dem Entladen des Transportcontainers 48 kann der Transportcontainer 48 von dem selben Transportfahrzeug oder einem anderen Transportfahrzeug angekoppelt und weiter transportiert werden.

## Patentansprüche

1. Verwendung eines Transportcontainers (48), insbesondere Wechselbrücke für einen Lastkraftwagen, zum Transportieren und Ausschütten von Post-Paketen mit
einer ersten Kammer (50) zur Aufnahme von als Post-Paket ausgestalteten Transportgegenständen (28) und
einer zweiten Kammer (52) zur Aufnahme von als Post-Paket ausgestalteten Transportgegenständen (28),
wobei die erste Kammer (50) eine zur zweiten Kammer (52) weisende Begrenzungswand (54) aufweist und die Begrenzungswand (54) derart ausgestaltet ist, dass durch die Begrenzungswand (54) eine Verbindungsöffnung (56) zwischen der ersten Kammer (50) und der zweiten Kammer (52) öffnenbar ist.

2. Verwendung eines Transportcontainers (48) nach Anspruch 1 **dadurch gekennzeichnet, dass** die Begrenzungswand (54) formflexibel, insbesondere elastisch, ausgestaltet ist, wobei die Begrenzungswand insbesondere durch mindestens eine eingeschlossene Luftschicht gepolstert ist und/oder überlappende Streifen flexiblen Materials aufweist.

3. Verwendung eines Transportcontainers (48) nach Anspruch 1 oder 2 **dadurch gekennzeichnet, dass** die erste Kammer (50) und/oder die zweite Kammer (52) ein Führungselement (38) enthält, wobei das Führungselement (38) formflexibel ausgestaltet ist und durch sein Volumen und/oder sein Gewicht eine vordefinierte Bewegungsrichtung (42) der als Post-Paket ausgestalteten Transportgegenstände (28) hemmt und/oder sperrt.

4. Verwendung eines Transportcontainers (48) nach einem der Ansprüche 1 bis 3 **dadurch gekennzeichnet, dass** die Begrenzungswand (54) um eine im Wesentlichen horizontale Achse schwenkbar ist.

5. Verwendung eines Transportcontainers (48) nach einem der Ansprüche 1 bis 4 **dadurch gekennzeichnet, dass** die erste Kammer (50) einen Boden (34) aufweist und sich die Verbindungsöffnung (56) bis zum Boden (34) erstreckt, wobei insbesondere zwischen der Begrenzungswand (54) und dem Boden (34) ein Abstand verbleibt.

6. Verwendung eines Transportcontainers (48) nach einem der Ansprüche 1 bis 5 **dadurch gekennzeichnet, dass** die zweite Kammer (52) eine zur ersten Kammer (50) weisende Trennwand aufweist, wobei die Trennwand derart ausgestaltet ist, dass durch die Trennwand die Verbindungsöffnung (56) zwischen der ersten Kammer (50) und der zweiten Kammer (52) zumindest teilweise öffnenbar ist.

7. Verwendung eines Transportcontainers (48) nach einem der Ansprüche 1 bis 6 **dadurch gekennzeichnet, dass** die erste Kammer (50) durch eine erste Transportbox (12) und die zweite Kammer (52) durch eine zweite Transportbox (12) ausgebildet sind, wobei die erste Transportbox (12) und die zweite Transportbox (12), insbesondere lösbar, mit einem gemeinsamen Wechselrahmen (62) verbunden sind.

8. Verwendung eines Transportcontainers (48) nach einem der Ansprüche 1 bis 7 **dadurch gekennzeichnet, dass** die zweite Kammer (52) eine von der ersten Kammer (50) wegweisende Begrenzungswand (54) aufweist und die Begrenzungswand (54) derart ausgestaltet ist, dass durch die Begrenzungsrand (54) eine Verbindungsöffnung (56) öffnenbar ist, wobei insbesondere mehr als eine zweite Kammer (52) vorgesehen ist.

9. Verwendung eines Transportcontainers (48) nach einem der Ansprüche 1 bis 7 **dadurch gekennzeichnet, dass** die erste Kammer (50) und/oder die zweite Kammer (52) eine Klappe (22) aufweist, wobei die Klappe (22) eine Öffnungsbewegung quer zur Fahrtrichtung aufweist und die Klappe (22) um eine im Wesentlichen horizontale Achse schwenkbar ist.

10. Verwendung eines Transportcontainers (48) in einem Transportfahrzeug, insbesondere Lastkraftwagen, wobei der Transportcontainer (48) auswechselbar befestigt ist und der Transportcontainer (48) nach einem der Ansprüche 1 bis 9 verwendet wird.

11. Verfahren zum Entladen eines Transportcontainers (48), insbesondere Wechselbrücke für einen Lastkraftwagen, zum Transportieren und Ausschütten von Post-Paketen mit
einer ersten Kammer (50) zur Aufnahme von als Post-Paket ausgestalteten Transportgegenständen (28) und
einer zweiten Kammer (52) zur Aufnahme von als Post-Paket ausgestalteten Transportgegenständen (28),
wobei die erste Kammer (50) eine zur zweiten Kammer (52) weisende Begrenzungswand (54) aufweist und die Begrenzungswand (54) derart ausgestaltet ist, dass durch die Begrenzungswand (54) eine Verbindungsöffnung (56) zwischen der ersten Kammer (50) und der zweiten Kammer (52) öffnenbar ist, bei dem
die zweite Kammer (52), die mindestens einen als Post-Paket ausgestalteten Transportgegenstand (28) enthält, im Bereich einer Ausgangsöffnung (30) geöffnet wird,
der Transportcontainer (48) um eine erste Achse (60) derart gekippt wird, dass die Ausgangsöffnung (30) im Vergleich zu dem als Post-Paket ausgestalteten Transportgegenstand (28) geodätisch tiefer positioniert ist,
der als Post-Paket ausgestaltetene Transportgegenstand (28) über die Ausgangsöffnung (30) aus der zweiten Kammer (52) herausrutscht,
gleichzeitig und/oder nachfolgend die Verbindungsöffnung (56) zwischen der ersten Kammer (50), die mindestens einen als Post-Paket ausgestalteten Transportgegenstand (28) enthält, und der zweiten Kammer (52) geöffnet wird und
der als Post-Paket ausgestaltetene Transportgegenstand (28) über die Verbindungsöffnung (56) von der ersten Kammer (50) zu der zweiten Kammer (52) rutscht.

12. Verfahren nach Anspruch 11, bei dem der Transportcontainer (48) um eine zweite Achse (58) derart gekippt wird, dass die Verbindungsöffnung (56) im Vergleich zu dem als Post-Paket ausgestalteten Transportgegenstand (28) in der ersten Kammer (50) geodätisch tiefer positioniert ist, wobei insbesondere die zweite Achse (58) von der ersten Achse (60) verschieden ist und vorzugsweise die zweite Achse (58) zur ersten Achse (60) im Wesentlichen rechtwinklig angeordnet ist.

13. Verfahren nach Anspruch 11 oder 12, bei dem nachdem der als Post-Paket ausgestaltetene Transportgegenstand (28) von der ersten Kammer (50) in die zweite Kammer (52) gerutscht ist, der als Post-Paket ausgestaltetene Transportgegenstand (28) innerhalb der zweiten Kammer (52) verzögert und/oder gestoppt wird, bevor der als Post-Paket ausgestaltetene Transportgegenstand (28) aus der zweiten Kammer (52) herausrutscht und/oder in eine weitere zweite Kammer (52) weiterrutscht.

14. Verfahren nach einem der Ansprüche 11 bis 13, bei dem der als Post-Paket ausgestaltetene Transportgegenstand (28) nach einem Rutschen durch einen formflexiblen Widerstand zumindest zeitweise verzögert und/oder gestoppt wird, wobei der formflexible Widerstand insbesondere durch eine formflexible Begrenzungswand (54) zum Öffnen der Verbindungsöffnung (56) und/oder durch eine Klappe (22) zum Öffnen der Ausgangsöffnung (30) und/oder einem Führungselement (38) zum Hemmen und/oder Sperren einer vordefinierte Bewegungsrichtung (42) der als Post-Paket ausgestalteten Transportgegenstände (28) ausgebildet wird.

15. Verfahren nach Anspruch 14, bei dem nach Beginn des Entladens und vor dem Ende des Entladens das Volumen und/oder das Ausmaß des formflexiblen Widerstands verändert, insbesondere vergrößert wird.

## Claims

1. Use of a transport container (48), in particular a swap body for a lorry, for transporting and tipping out mailed parcels, having
a first chamber (50) for accommodating transported articles (28) in the form of mailed parcels, and
a second chamber (52) for accommodating transported articles (28) in the form of mailed parcels,
wherein the first chamber (50) has a boundary wall (54) oriented in the direction of the second chamber (52), and the boundary wall (54) is configured such that a connecting opening (56) between the first chamber (50) and the second chamber (52) can be opened by way of the boundary wall (54).

2. Use of a transport container (48) according to Claim 1, **characterized in that** the boundary wall (54) is of a form-flexible, in particular elastic, configuration, wherein the boundary wall in particular is padded by at least one enclosed air layer and/or has overlapping strips of flexible material.

3. Use of a transport container (48) according to Claim 1 or 2, **characterized in that** the first chamber (50) and/or the second chamber (52) contain/contains a guide element (38), wherein the guide element (38) is of a form-flexible configuration and uses its volume and/or its weight to inhibit and/or block a predefined movement direction (42) of the transported articles (28) in the form of mailed parcels.

4. Use of a transport container (48) according to one of Claims 1 to 3, **characterized in that** the boundary wall (54) can be pivoted about a substantially horizontal axis.

5. Use of a transport container (48) according to one of Claims 1 to 4, **characterized in that** the first chamber (50) has a floor (34) and the connecting opening (56) extends as far as the floor (34), wherein a spacing remains in particular between the boundary wall (54) and the floor (34).

6. Use of a transport container (48) according to one of Claims 1 to 5, **characterized in that** the second chamber (52) has a partition wall oriented in the direction of the first chamber (50), wherein the partition wall is configured such that the connecting opening (56) between the first chamber (50) and the second chamber (52) can be opened, at least in part, by way of the partition wall.

7. Use of a transport container (48) according to one of Claims 1 to 6, **characterized in that** the first chamber (50) is formed by a first transport box (12) and the second chamber (52) is formed by a second transport box (12), wherein the first transport box (12) and the second transport box (12) are connected, in particular in a releasable manner, to a common interchangeable frame (62).

8. Use of a transport container (48) according to one of Claims 1 to 7, **characterized in that** the second chamber (52) has a boundary wall (54) oriented away from the first chamber (50), and the boundary wall (54) is configured such that a connecting opening (56) can be opened by way of the boundary wall (54), wherein in particular more than one second chamber (52) is provided.

9. Use of a transport container (48) according to one of Claims 1 to 7, **characterized in that** the first chamber (50) and/or the second chamber (52) has a shutter (22), wherein the shutter (22) has an opening movement in the direction transverse to the direction of travel and the shutter (22) can be pivoted about an essentially horizontal axis.

10. Use of a transport container (48) in a transport vehicle, in particular a lorry, wherein the transport container (48) is fastened in an interchangeable manner and use is made of the transport container (48) according to one of Claims 1 to 9.

11. Method by means of which a transport container (48), in particular a swap body for a lorry, for transporting and tipping out mailed parcels, having
a first chamber (50) for accommodating transported articles (28) in the form of mailed parcels, and
a second chamber (52) for accommodating transported articles (28) in the form of mailed parcels,
wherein the first chamber (50) has a boundary wall (54) oriented in the direction of the second chamber (52), and the boundary wall (54) is configured such that a connecting opening (56) between the first chamber (50) and the second chamber (52) can be opened by way of the boundary wall (54), is unloaded and in the case of which the second chamber (52), which contains at least one article (28) in the form of a mailed parcel, is opened in the region of an exit opening (30), the transport container (48) is tilted about a first axis (60) such that the exit opening (30) is positioned at a geodetically lower level than the transported article (28) in the form of a mailed parcel,
the transported article (28) in the form of a mailed parcel slides out of the second chamber (52) via the exit opening (30),
at the same time and/or thereafter, the connecting opening (56) between the first chamber (50), which contains at least one transported article (28) in the form of a mailed parcel, and the second chamber (52) is opened, and
the transported article (28) in the form of a mailed parcel slides from the first chamber (50) to the second chamber (52) via the connecting opening (56).

12. Method according to Claim 11, in the case of which the transport container (48) is tilted about a second axis (58) such that the connecting opening (56) is positioned at a geodetically lower level than the transported article (28), in the form of a mailed parcel, in the first chamber (50), wherein in particular the second axis (58) is different from the first axis (60) and preferably the second axis (58) is arranged essentially at right angles to the first axis (60).

13. Method according to Claim 11 or 12, in the case of which, once the transported article (28) in the form of a mailed parcel has slid from the first chamber (50) into the second chamber (52), the transported article (28) in the form of a mailed parcel is slowed down and/or stopped within the second chamber (52) prior to the transported article (28) in the form of a mailed parcel sliding out of the second chamber (52) and/or sliding on further into a further second chamber (52).

14. Method according to one of Claims 11 to 13, in the case of which the transported article (28) in the form of a mailed parcel, following a sliding action, is at least temporarily slowed down and/or stopped by a form-flexible resistance, wherein the form-flexible resistance is formed in particular by a form-flexible boundary wall (54) for opening the connecting opening (56) and/or by a shutter (22) for opening the exit opening (30) and/or a guide element (38) for inhibiting and/or blocking a predefined movement direction (42) of the transported articles (28) in the form of mailed parcels.

15. Method according to Claim 14, in the case of which, once unloading has begun and prior to completion of unloading, the volume and/or the dimension of the form-flexible resistance is changed, in particular increased.

## Revendications

1. Utilisation d'un conteneur de transport (48), en particulier une caisse mobile pour un véhicule poids-lourds, destiné à transporter et déverser des colis postaux, comprenant
une première chambre (50) pour recevoir des objets à transporter (28) réalisés sous forme de colis postaux et
une deuxième chambre (52) pour recevoir des objets à transporter (28) réalisés sous forme de colis postaux,
la première chambre (50) présentant une paroi de limitation (54) tournée vers la deuxième chambre (52) et la paroi de limitation (54) étant configurée de telle sorte qu'une ouverture de connexion (56) entre la première chambre (50) et la deuxième chambre (52) puisse être ouverte à travers la paroi de limitation (54).

2. Utilisation d'un conteneur de transport (48) selon la revendication 1, **caractérisée en ce que** la paroi de limitation (54) est configurée sous forme flexible, en particulier élastique, la paroi de limitation étant notamment rembourrée par au moins une couche d'air incorporée et/ou présentant des bandes superposées d'un matériau flexible.

3. Utilisation d'un conteneur de transport (48) selon la revendication 1 ou 2, **caractérisée en ce que** la première chambre (50) et/ou la deuxième chambre (52) contien(nen)t un élément de guidage (38), l'élément de guidage (38) étant réalisé sous forme flexible et empêchant et/ou bloquant, par son volume et/ou son poids, une direction de déplacement prédéfinie (42) des objets à transporter (28) configurés sous forme de colis postaux.

4. Utilisation d'un conteneur de transport (48) selon l'une quelconque des revendications 1 à 3, **caractérisée en ce que** la paroi de limitation (54) peut pivoter autour d'un axe essentiellement horizontal.

5. Utilisation d'un conteneur de transport (48) selon l'une quelconque des revendications 1 à 4, **caractérisée en ce que** la première chambre (50) présente un fond (34) et l'ouverture de connexion (56) s'étend jusqu'au fond (34), un espacement subsistant notamment entre la paroi de limitation (54) et le fond (34).

6. Utilisation d'un conteneur de transport (48) selon l'une quelconque des revendications 1 à 5, **caractérisée en ce que** la deuxième chambre (52) présente une paroi de séparation tournée vers la première chambre (50), la paroi de séparation étant configurée de telle sorte que l'ouverture de connexion (56) entre la première chambre (50) et la deuxième chambre (52) puisse être ouverte au moins en partie à travers la paroi de séparation.

7. Utilisation d'un conteneur de transport (48) selon l'une quelconque des revendications 1 à 6, **caractérisée en ce que** la première chambre (50) est réalisée par une première boîte de transport (12) et la deuxième chambre (52) est réalisée par une deuxième boîte de transport (12), la première boîte de transport (12) et la deuxième boîte de transport (12) étant connectées notamment de manière détachable à un cadre interchangeable commun (62).

8. Utilisation d'un conteneur de transport (48) selon l'une quelconque des revendications 1 à 7, **caractérisée en ce que** la deuxième chambre (52) présente une paroi de limitation (54) tournée à l'opposé de la première chambre (50) et la paroi de limitation (54) est configurée de telle sorte qu'une ouverture de connexion (56) puisse être ouverte à travers la paroi de limitation (54), plus d'une deuxième chambre (52) étant notamment prévue.

9. Utilisation d'un conteneur de transport (48) selon l'une quelconque des revendications 1 à 7, **caractérisée en ce que** la première chambre (50) et/ou la deuxième chambre (52) présentent un clapet (22), le clapet (22) présentant un mouvement d'ouverture transversalement à la direction de conduite et le clapet (22) pouvant pivoter autour d'un axe sensiblement horizontal.

10. Utilisation d'un conteneur de transport (48) dans un véhicule de transport, en particulier un véhicule poids-lourds, le conteneur de transport (48) étant fixé de manière interchangeable et le conteneur de transport (48) étant utilisé selon l'une quelconque des revendications 1 à 9.

11. Procédé pour décharger un conteneur de transport (48), en particulier une caisse mobile pour un véhicule poids-lourds, pour le transport et le déversement de colis postaux, comprenant une première chambre (50) pour recevoir des objets à transporter (28) configurés sous forme de colis postaux et
une deuxième chambre (52) pour recevoir des objets à transporter (28) configurés sous forme de colis postaux,
la première chambre (50) présentant une paroi de limitation (54) tournée vers la deuxième chambre (52) et la paroi de limitation (54) étant configurée de telle sorte qu'une ouverture de connexion (56) entre la première chambre (50) et la deuxième chambre (52) puisse être ouverte à travers la paroi de limitation (54), dans lequel la deuxième chambre (52), qui contient au moins un objet à transporter (28) configuré sous forme de colis postal, est ouverte dans la région d'une ouverture de sortie (30),
le conteneur de transport (48) est basculé autour d'un premier axe (60) de telle sorte que l'ouverture de sortie (30) soit positionnée plus profondément du point de vue géodésique par comparaison avec l'objet à transporter (28) configuré sous forme de colis postal,
l'objet à transporter (28) configuré sous forme de colis postal glisse hors de la deuxième chambre (52) par le biais de l'ouverture de sortie (30), simultanément et/ou ensuite, l'ouverture de connexion (56) entre la première chambre (50), qui contient au moins un objet à transporter (28) configuré sous forme de colis postal, et la deuxième chambre (52), est ouverte et
l'objet à transporter (28) configuré sous forme de colis postal glisse par le biais de l'ouverture de connexion (56) depuis la première chambre (50) jusqu'à la deuxième chambre (52).

12. Procédé selon la revendication 11, dans lequel le conteneur de transport (48) est basculé autour d'un deuxième axe (58) de telle sorte que l'ouverture de connexion (56), par comparaison avec l'objet à transporter (28) configuré sous forme de colis postal, soit positionnée plus profondément du point de vue géodésique dans la première chambre (50), le deuxième axe (58) étant notamment différent du premier axe (60) et de préférence le deuxième axe (58) étant disposé essentiellement à angle droit par rapport au premier axe (60).

13. Procédé selon la revendication 11 ou 12, dans lequel après que l'objet à transporter (28) configuré sous forme de colis postal a glissé depuis la première chambre (50) dans la deuxième chambre (52), l'objet à transporter (28) configuré sous forme de colis postal est ralenti et/ou arrêté à l'intérieur de la deuxième chambre (52), avant que l'objet à transporter (28) configuré sous forme de colis postal ne glisse hors de la deuxième chambre (52) et/ou ne glisse ensuite dans une deuxième chambre (52) supplémentaire.

14. Procédé selon l'une quelconque des revendications 11 à 13, dans lequel l'objet à transporter (28) configuré sous forme de colis postal, après avoir glissé, est ralenti et/ou arrêté au moins temporairement par une résistance de forme flexible, la résistance de forme flexible étant réalisée notamment par une paroi de limitation de forme flexible (54) pour l'ouverture de l'ouverture de connexion (56) et/ou par un clapet (22) pour l'ouverture de l'ouverture de sortie (30) et/ou par un élément de guidage (38) pour empêcher et/ou bloquer une direction de déplacement prédéfinie (42) des objets à transporter (28) configurés sous forme de colis postaux.

15. Procédé selon la revendication 14, dans lequel, après le début du déchargement et avant la fin du déchargement, le volume et/ou la dimension de la résistance de forme flexible sont variés, en particulier sont augmentés.
